# EUROPEAN PATENT APPLICATION

(11) **EP 1 806 188 A1**
(43) Date of publication of application: **11.07.2007**
(21) Application number: 06000343.1
(22) Date of filing: 10.01.2006
(51) Int. Cl.: B22D 19/00, B62M 3/00

(54) **Molding assembly and method for making a crank**

(71) Applicant: Yu, Chai-chi, Tan-Tzu Hsiang Taichung Hsien (TW)
(72) Inventor: Yu, Chai-chi, Tan-Tzu Hsiang Taichung Hsien (TW)
(74) Representative: Knoblauch, Andreas

(57) **Abstract**

A molding assembly (2) includes lower and upper molds (20, 30). The lower mold (20) includes an elongated mold cavity (23), and two spaced apart lower core positioning posts (24) . Each of the lower core positioning post (24) has a lower abutment end face (25). The upper mold (30) includes an elongated mold cavity (33), and two spaced apart upper core positioning posts (34). Each of the upper core positioning posts (34) has an upper abutment end face (35) abutting against the lower abutment end face (25) of a respective lower core positioning post (24) when the lower and upper molds (20,30) are closed. Each of the upper and lower core positioning posts (34,24) is spaced apart from a confining wall (332,232) of the mold cavity (33,23) of a corresponding one of the upper and lower molds (30,20) so that a gap is formed around each of the upper and lower core positioning posts (34,24) and between each of the upper and lower core positioning posts (34,24) and the confining wall (332,232).

## Description

The invention relates to a molding assembly, more particularly to a molding assembly for making a crank. The invention also relates to a method for making the crank.

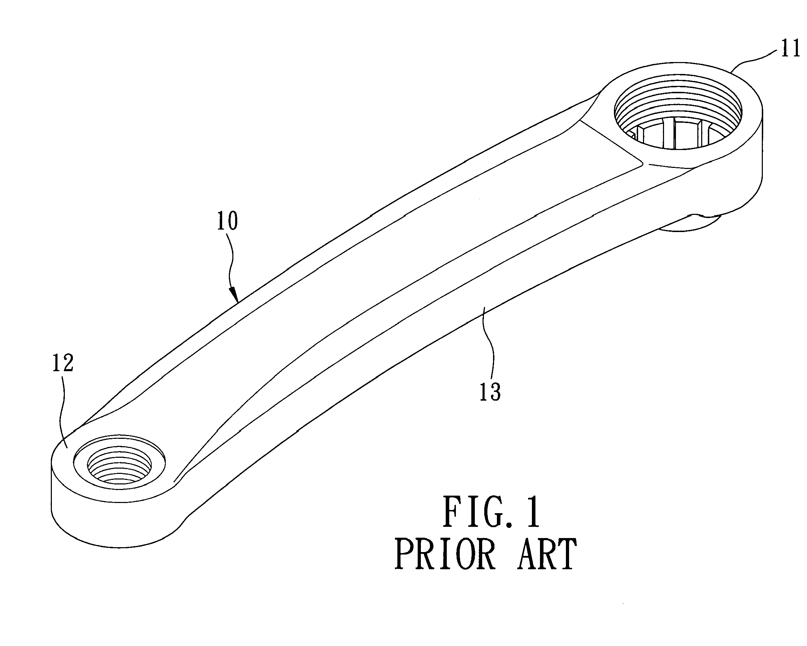

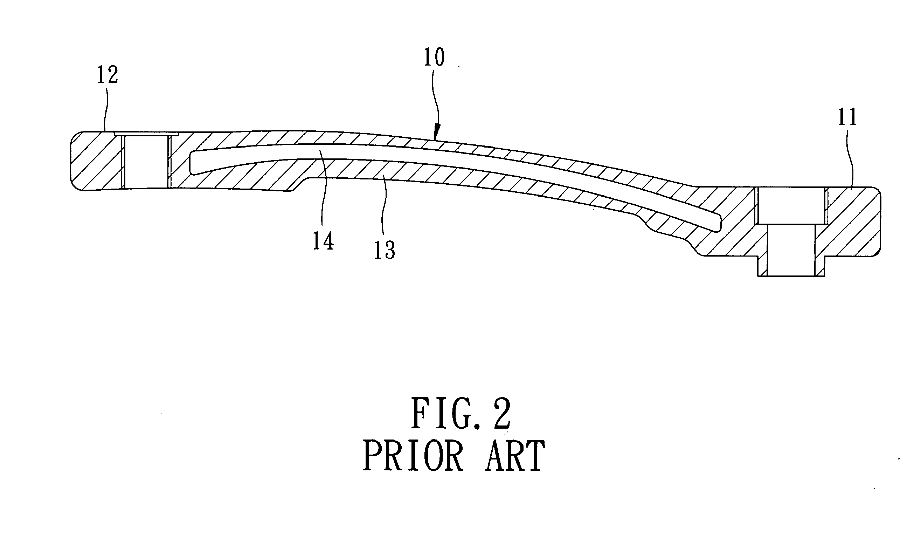

Referring to Figures 1 and 2, a conventional crank 10 is made by forging and is hollow to reduce the weight thereof. The crank 10 includes a bracket-axle-coupling end portion 11, a pedal-coupling end portion 12 opposite to the bracket-axle-coupling end portion 11, an elongated middle portion 13 interconnecting the bracket-axle-coupling end portion 11 and the pedal-coupling end portion 12, and a chamber 14 formed in the elongated middle portion 13.

Although the conventional hollow crank 10 has a reduced weight by forming the chamber 14 in the elongated middle portion 13, the forging process is a time-wasting procedure, which in turn leads to poor productivity.

Therefore, one object of the present invention is to provide a molding assembly for making a crank, which can increase productivity during manufacture of the cranks. Another object of the present invention is to provide a method for making a crank using the molding assembly of this invention.

In the first aspect of this invention, the molding assembly for making a crank according to this invention includes a lower mold and an upper mold. The lower mold includes an elongated mold cavity that has two longitudinally opposite ends, and two spaced apart lower core positioning posts provided in the mold cavity. Each of the lower core positioning posts having a lower abutment end face. The upper mold includes an elongated mold cavity that has two longitudinally opposite ends, and two spaced apart upper core positioning posts provided in the mold cavity of the upper mold. Each of the upper core positioning posts has an upper abutment end face which can abut against the lower abutment end face of a respective one of the lower core positioning posts when the lower and upper molds are closed. Each of the upper and lower core positioning posts is spaced apart from a confining wall of the mold cavity of a corresponding one of the upper and lower molds so that a gap is formed around each of the upper and lower core positioning posts and between each of the upper and lower core positioning posts and the confining wall of the mold cavity of the corresponding one of the upper and lower molds. Each of the lower core positioning posts has a core positioning groove in the lower abutment end face thereof. The core positioning grooves of the lower core positioning posts are aligned with each other in a longitudinal direction of the mold cavity of the lower mold.

In the second aspect of this invention, the method for making a crank according to this invention includes the steps of:
preparing a molding assembly including:
   a lower mold including an elongated mold cavity that has two longitudinally opposite ends, and two spaced apart lower core positioning posts provided in the mold cavity, each of the lower core positioning posts having a lower abutment end face; and
   an upper mold including an elongated mold cavity that has two longitudinally opposite ends, and two spaced apart upper core positioning posts provided in the mold cavity of the upper mold, each of the upper core positioning posts having an upper abutment end face which can abut against the lower abutment end face of a respective one of the lower and upper positioning posts when the lower and upper molds are closed;
   each of the upper and lower core positioning posts being spaced apart from a confining wall of the mold cavity of a corresponding one of the upper and lower molds so that a gap is formed around each of the upper and lower core positioning posts and between each of the upper and lower core positioning posts and the confining wall of the mold cavity of the corresponding one of the upper and lower molds; and
   each of the lower core positioning posts having a core positioning groove in the lower abutment end face thereof, the core positioning grooves of the lower core positioning posts being aligned with each other in a longitudinal direction of the mold cavity of the lower mold;
   preparing an elongated hollow core having two longitudinally opposite ends;
   disposing the hollow core in the mold cavity of the lower mold by positioning the opposite ends of the hollow core in the core positioning grooves, respectively;
   covering the lower mold with the upper mold so that the upper core positioning posts are aligned respectively with the lower core positioning posts and press the opposite ends of the hollow core against the lower core positioning posts; and
   introducing a molding material into the mold cavities of the upper and lower molds to form a product, wherein the lower and upper core positioning posts provide crank shaft holes in the product.

In the third aspect of this invention, a crank according to this invention includes an elongated hollow core, an outer cover, and two crank shaft holes. The elongated hollow core has two longitudinally opposite ends. The outer cover is molded over and encloses the hollow core, and has two longitudinally opposite end portions extending beyond the ends of the hollow core. The crank shaft holes are formed respectively in the end portions of the outer cover. The hollow core spans the crank shaft holes and has no portion extending into the crank shaft holes.

Other features and advantages of the present invention will become apparent in the following detailed description of the preferred embodiments with reference to the accompanying drawings, of which:
Figure 1 is a perspective view of a conventional hollow crank;
Figure 2 is a sectional view of the conventional hollow crank;
Figure 3 is a perspective view of the preferred embodiment of a molding assembly for making a crank according to this invention;
Figure 4 is a flow diagram of the preferred embodiment of a method for making a crank according to this invention; and
Figures 5, 6, 7, 8, 9, 10, and 11 illustrate consecutive steps of the preferred embodiment of Figure 4.

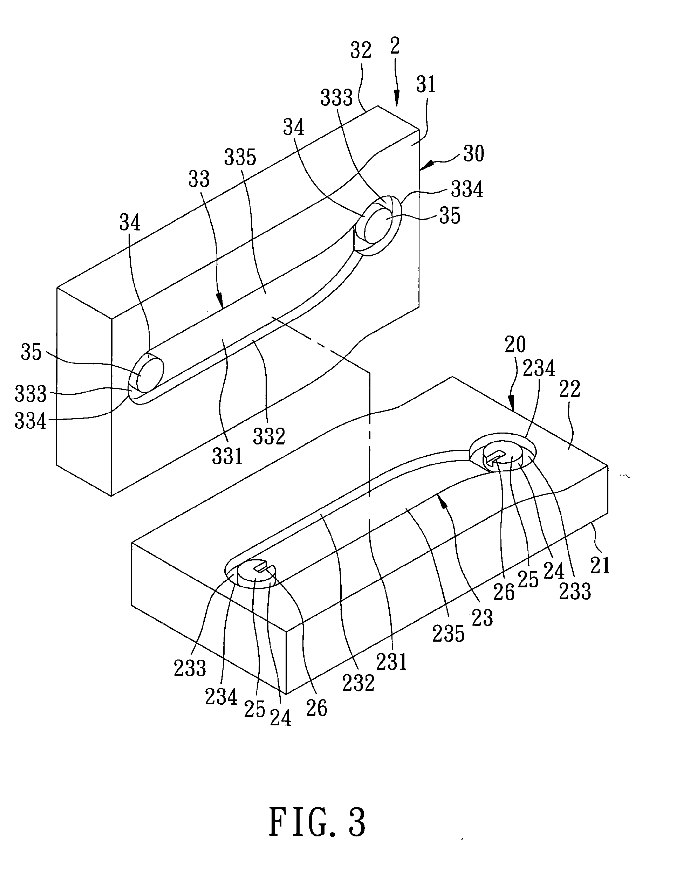

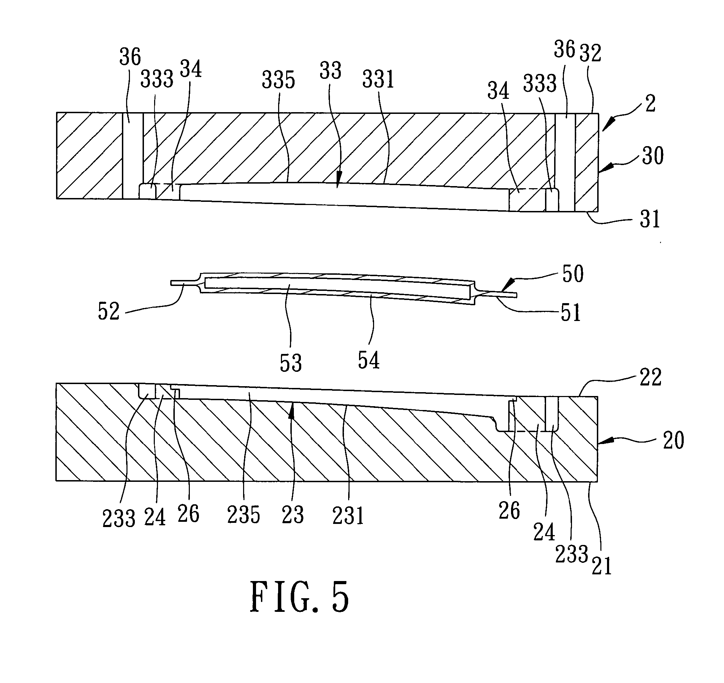

Referring to Figures 3 and 5, the preferred embodiment of the molding assembly 2 for making a crank according to this invention includes a lower mold 20 and an upper mold 30.

The lower mold 20 includes a first surface 21, a second surface 22, an elongated mold cavity 23 recessed inwardly from the second surface 22 and having two longitudinally opposite ends 234, and two spaced apart lower core positioning posts 24 provided in the mold cavity 23. Each of the lower core positioning posts 24 has a lower abutment end face 25. Each of the lower core positioning posts 24 further has a core positioning groove 26 in the lower abutment end face 25 thereof. The core positioning grooves 26 of the lower core positioning posts 24 are aligned with each other in a longitudinal direction of the mold cavity 23.

The mold cavity 23 is defined by a bottom surface 231 and a confining wall 232 extending peripherally from the bottom surface 231. The mold cavity 23 includes two opposite end portions 233 and an intermediate elongated portion 235 interconnecting the end portions 233. The lower core positioning posts 24 are disposed in the end portions 233 of the mold cavity 23, respectively.

Each of the lower core positioning posts 24 is spaced apart from the confining wall 232 of the mold cavity 23 of the lower mold 20 so that a gap is formed around each of the lower core positioning posts 24 and between each of the lower core positioning posts 24 and the confining wall 232.

The upper mold 30 includes a third surface 31, a fourth surface 32 opposite to the third surface 31, an elongatedmold cavity 33 recessed inwardly from the third surface 31 and having two longitudinally opposite ends 334, two spaced apart upper core positioning posts 34 provided in the mold cavity 33, and two charging holes 36 fluidly communicated with the mold cavity 33. Each of the upper core positioning posts 34 has an upper abutment end face 35 which can abut against the lower abutment end face 25 of a respective one of the lower core positioning posts 24 when the lower and upper molds 20,30 are closed.

The mold cavity 33 is defined by a bottom surface 331 and a confining wall 332 extending peripherally from the bottom surface 331. The mold cavity 33 includes two opposite end portions 333 fluidly communicated with the charging holes 36, respectively, and an intermediate elongated portion 335 interconnecting the end portions 333. The upper core positioning posts 34 are disposed in the end portions 333 of the mold cavity 33, respectively.

Each of the upper core positioning posts 34 is spaced apart from the confining wall 332 of the mold cavity 33 of the upper mold 30 so that a gap is formed around each of the upper core positioning posts 34 and between each of the upper core positioning posts 34 and the confining wall 332.

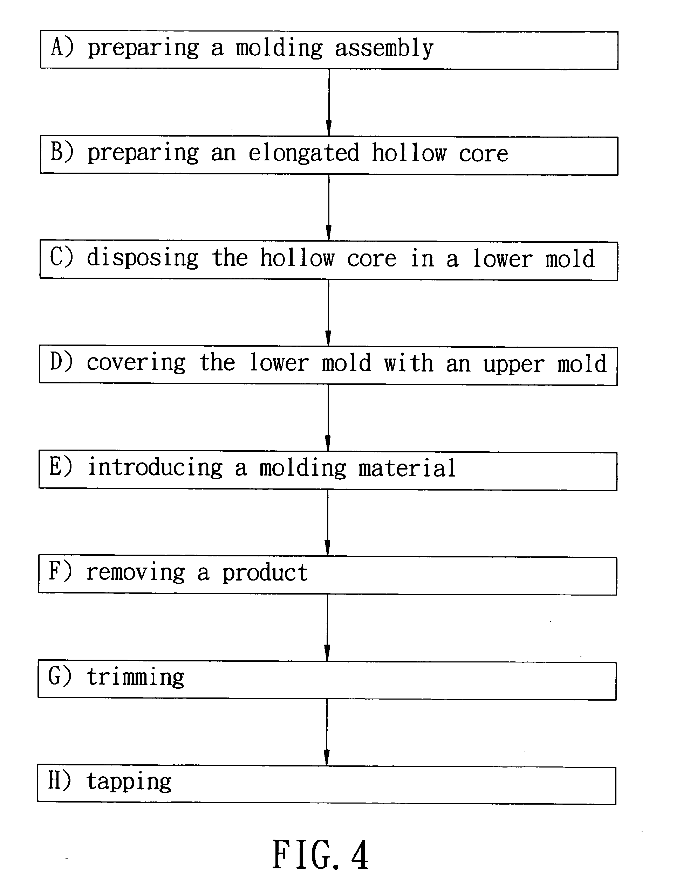

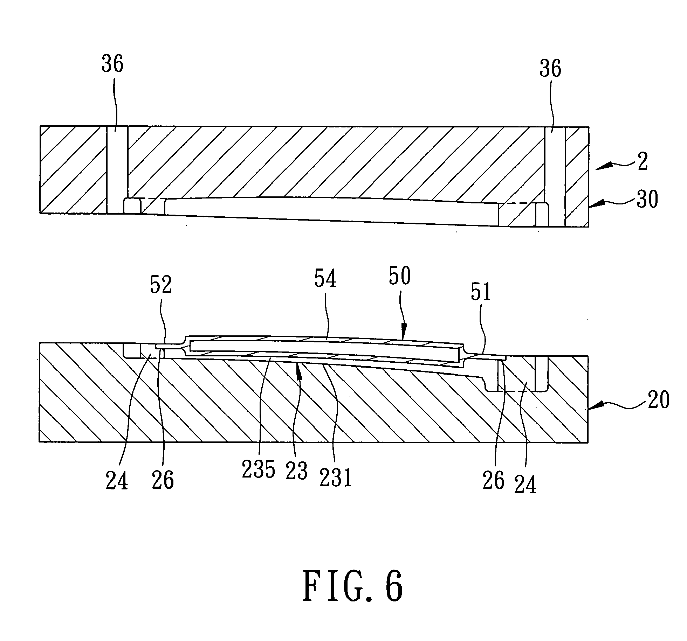

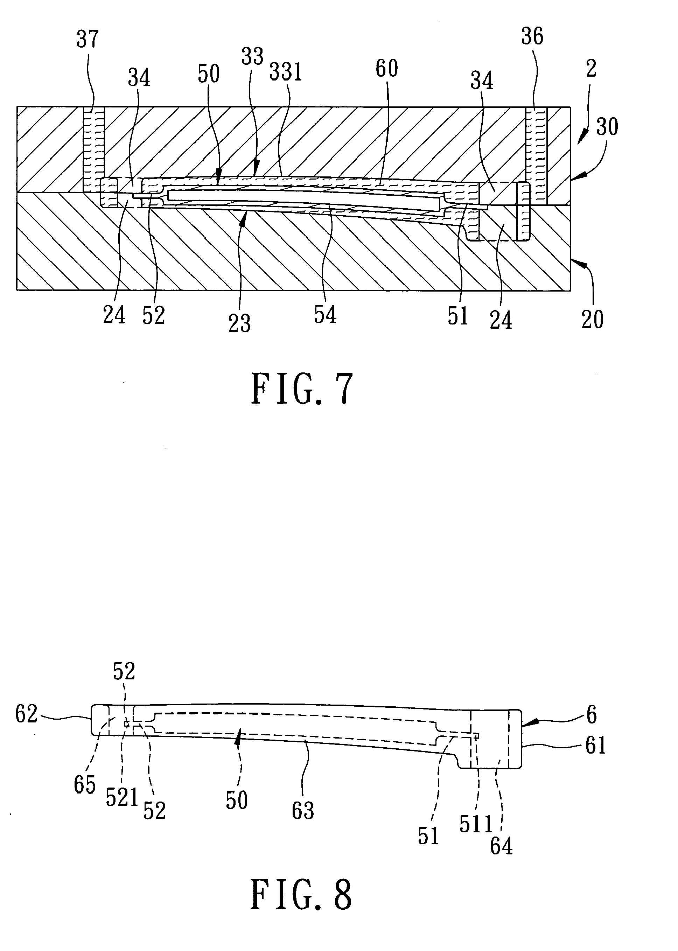

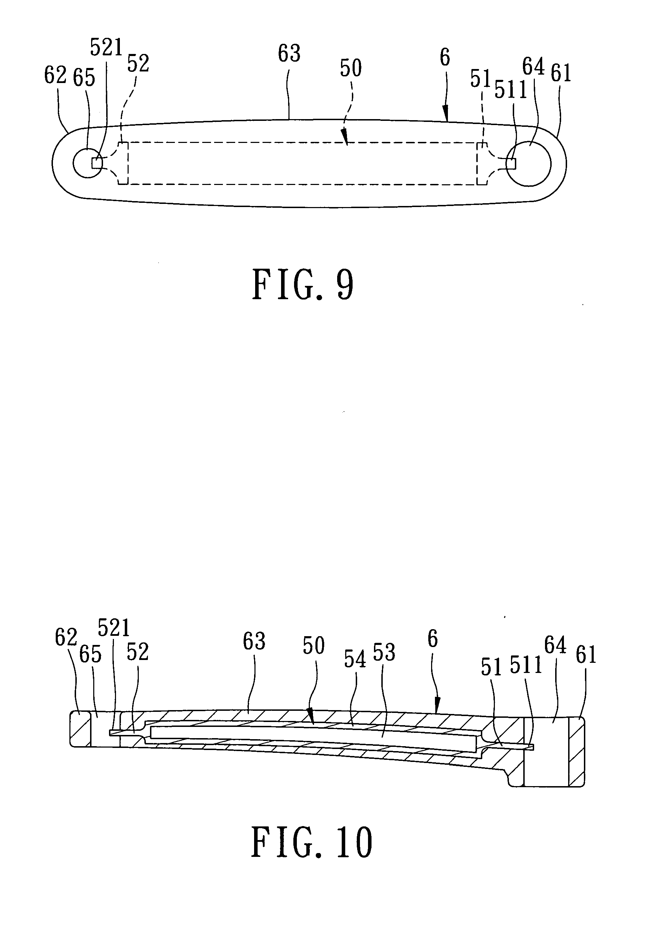

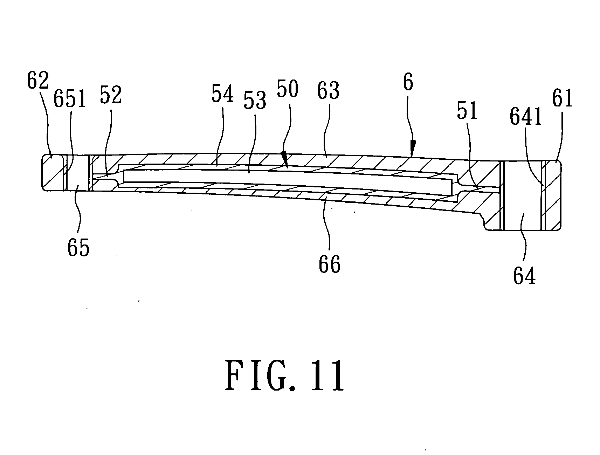

Referring to Figure 4, the preferred embodiment of the method for making a crank according to this invention includes the steps of:
A) preparing a molding assembly 2:
   The mold assembly 2 described above is prepared.
B) preparing an elongated hollow core 50:
   Referring to Figure 5, the elongated hollow core 50 is configured as an elongated hollow body, and has two longitudinally opposite ends 51,52, a middle hollow portion 54 interconnecting the ends 51, 52, and a chamber 53 formed in the middle hollow portion 54. The hollow core 50 has a cross-section which is reduced at each of the ends 51,52 of the hollow core 50. Preferably, the elongated hollow core 50 is made of an iron alloy, an aluminum alloy, a magnesium alloy, or the like.
C) disposing the hollow core 50 in the lower mold 20:
   Referring to Figure 6, the hollow core 50 is disposed in the mold cavity 23 of the lower mold 20 by positioning the opposite ends 51,52 of the hollow core 50 in the core positioning grooves 26, respectively, so as to dispose the middle hollow portion 54 of the hollow core 50 in the intermediate elongated portion 235 of the mold cavity 23 and so as to space apart the middle hollow portion 54 of the hollow core 50 from the bottom surface 231 of the mold cavity 23.
D) covering the lower mold 20 with the upper mold 30:
   Referring to Figure 7, the lower mold 20 is covered with the upper mold 30 so that the core positioning posts 34 of the upper mold 30 are aligned respectively with the lower core positioning posts 24 of the lower mold 20 and press the opposite ends 51,52 of the hollow core 50 against the lower core positioning posts 24 of the lower mold 20, and so that the middle hollow portion 54 of the hollow core 50 is spaced apart from the bottom surface 331 of the mold cavity 33 of the upper mold 30.
E) introducing a molding material 60:
   Referring to Figures 7 and 8, a molding material 60 in a molten state is introduced into the mold cavities 33,23 of the upper and lower molds 30, 20 via the charging holes 36 to form a product 6. The molding material 60 can be an iron alloy, an aluminum alloy, a magnesium alloy, or the like. The lower and upper core positioning posts 24,34 provide first and second crank shaft holes 64,65 in the product 6.
F) removing the product 6:
   After cooling, the product 6 is removed from the upper and lower molds 30,20. The product 6 includes a first end portion 61, a second end portion 62 opposite to the first end portion 61, an elongated middle portion 63 interconnecting the first and second end portions 61,62 and having the hollow core 50 embedded therein, and the first and second crank shaft holes 64,65 formed in the first and second end portion 61,62.
G) trimming:
   Referring to Figures 8, 9, and 10, portions 511, 521 of the opposite ends 51,52 of the hollow core 50, which are received by the core positioning grooves 26 during molding, are removed so that no portion of the hollow core 50 extends into the crank shaft holes 64,65.
H) tapping:
   Referring to Figure 11, the first and second crank shaft holes 64,65 in the product 6 are tapped to form first and second threaded holes 641,651.

Referring to Figure 11, the product 6 (i.e., the crank) made by the aforesaid method includes the elongated hollow core 50, an outer cover 66, and two crank shaft holes 64,65. The elongated hollow core 50 has two longitudinally opposite ends 51, 52. The outer cover 66 is molded over and encloses the hollow core 50, and has two longitudinally opposite end portions 61,62 extending beyond the ends 51,52 of the hollow core 50. The crank shaft holes 64, 65 are formed respectively in the end portions 61, 62 of the outer cover 66. The hollow core 50 spans the crank shaft holes 61,62 and has no portion extending into the crank shaft holes 61, 62 . As described above, the hollow core 50 and the outer cover 66 are independently made of an iron alloy, an aluminum alloy, a magnesium alloy, or the like.

In view of the foregoing, since the crank product 6 is made by molding, the manufacturing process thereof is simplified and productivity can be improved.

## Claims

1. A molding assembly (2) for making a crank, **characterized by**:
a lower mold (20) including an elongated mold cavity (23) that has two longitudinally opposite ends (234), and two spaced apart lower core positioning posts (24) provided in said mold cavity (23), each of said lower core positioning posts (24) having a lower abutment end face (25); and
an upper mold (30) including an elongated mold cavity (33) that has two longitudinally opposite ends (334), and two spaced apart upper core positioning posts (34) provided in said mold cavity (33) of said upper mold (30), each of said upper core positioning posts (34) having an upper abutment end face (35) which can abut against said lower abutment end face (25) of a respective one of said lower core positioning posts (24) when said lower and upper molds (20,30) are closed;
each of said upper and lower core positioning posts (34,24) being spaced apart from a con fining wall (332,232) of said mold cavity (33,23) of a corresponding one of said upper and lower molds (30,20) so that a gap is formed around each of said upper and lower core positioning posts (34,24) and between each of said upper and lower core positioning posts (34,24) and said confining wall (332,232) of said mold cavity (33,23) of the corresponding one of said upper and lower molds (30,20) ;
each of said lower core positioning posts (24) having a core positioning groove (26) in said lower abutment end face (25) thereof, said core positioning grooves (26) of said lower core positioning posts (24) being aligned with each other in a longitudinal direction of said mold cavity (23) of said lower mold (20).

2. A method of making a crank, **characterized by** the steps of:
preparing a molding assembly (2) including:
a lower mold (20) including an elongated mold cavity (23) that has two longitudinally opposite ends (234), and two spaced apart lower core positioning posts (24) provided in the mold cavity (23), each of the lower core positioning posts (24) having a lower abutment end face (25); and
an upper mold (30) including an elongated mold cavity (33) that has two longitudinally opposite ends (334), and two spaced apart upper core positioning posts (34) provided in the mold cavity (33) of the upper mold (30), each of the upper core positioning posts (34) having an upper abutment end face (35) which can abut against the lower abutment end face (25) of a respective one of the lower core positioning posts (24) when the lower and upper molds (20,30) are closed;
each of the upper and lower core positioning posts (34,24) being spaced apart from a confining wall (332,232) of the mold cavity (33,23) of a corresponding one of the upper and lower molds (30,20) so that a gap is formed around each of the upper and lowercorepositioningposts (34,24) andbetweeneach of the upper and lower core positioning posts (34,24) and the confining wall (332,232) of the mold cavity (33,23) of the corresponding one of the upper and lower molds (30,20);
each of the lower core positioning posts (24) having a core positioning groove (26) in the lower abutment end face (25) thereof, the core positioning grooves (26) of the lower core positioning posts (24) being aligned with each other in a longitudinal direction of the mold cavity (23) of the lower mold (20) ;
preparing an elongated hollow core (50) having two longitudinally opposite ends (51,52);
disposing the hollow core (50) in the mold cavity (23) of the lower mold(20) by positioning the opposite ends (51,52) of the hollow core (50) in the core positioning grooves (26), respectively;
covering the lower mold (20) with the upper mold (30) so that the upper core positioning posts (34) are aligned respectively with the lower core positioning posts (24) and press the opposite ends (51,52) of the hollowcore (50) against the lower core positioning posts (24); and
introducing a molding material (60) into the mold cavities (33,23) of the upper and lower molds (30,20) to form a product (6), wherein the lower and upper core positioning posts (24,34) provide crank shaft holes (64,65) in the product (6).

3. The method as claimed in Claim 2, **characterized in that** the hollow core (50) has a cross-section which is reduced at each of the ends (51, 52) of the hollow core (50).

4. The method as claimed in Claim 2, further **characterized by** the steps of:
removing the product (6) from the upper and lower molds (30,20); and
removing the opposite ends (51,52) of the hollow core (50) which are received by the core positioning grooves (26) during molding so that no portion of the hollow core (50) extends into the crank shaft holes (64,65) .

5. The method as claimed in Claim 4, further **characterized by** the step of tapping the crank shaft holes (64,65) in the product (6).

6. The method as claimed in Claim 2, **characterized in that** the hollow core (50) is made of a material selected from the group consisting of an iron alloy, an aluminum alloy, and a magnesium alloy.

7. The method as claimed in Claim 2, **characterized in that** the molding material (60) is selected from the group consisting of an iron alloy, an aluminum alloy, and a magnesium alloy.

8. A crank **characterized by**:
an elongated hollow core (50) having two longitudinally opposite ends (51,52);
an outer cover (66) molded over and enclosing said hollow core (50) and having two longitudinally opposite end portions (61, 62) extending beyond said ends (51, 52) of said hollow core (50); and
two crank shaft holes (64,65) formed respectively in said end portions (61,62) of said outer cover (66);
saidhollowcore (50) spanning said crank shaft holes (61, 62) and having no portion extending into said crank shaft holes (61,62).

9. The crank as claimed in Claim 8, **characterized in that** said hollow core (50) is made of a material selected from the group consisting of an iron alloy, an aluminum alloy, and a magnesium alloy.

10. The crank as claimed in Claim 8, **characterized in that** said outer cover (66) is made by molding a material selected from the group consisting of an iron alloy, an aluminum alloy, and a magnesium alloy.
